(19) Europäisches Patentamt

European Patent Office

Office européen des brevets

(11) **EP 2 879 117 B1**

(12) **EUROPEAN PATENT SPECIFICATION**

(45) Date of publication and mention
of the grant of the patent:
**16.11.2016 Bulletin 2016/46**

(51) Int Cl.:
***G08G 1/16*** *(2006.01)*      ***G06K 9/00*** *(2006.01)*

(21) Application number: **14192436.5**

(22) Date of filing: **10.11.2014**

(54) **Information processing apparatus, camera mounting angle estimation method, and program**

Informationsverarbeitungsvorrichtung, Kameramontagewinkel-Schätzverfahren und Programm

Appareil de traitement d'informations, procédé d'estimation d'angle de montage de caméra et programme

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2013 JP 2013248826**

(43) Date of publication of application:
**03.06.2015 Bulletin 2015/23**

(73) Proprietor: **FUJITSU LIMITED
Kawasaki-shi,
Kanagawa 211-8588 (JP)**

(72) Inventors:
• **Kato, Tetsuhiro
Kanagawa, 211-8588 (JP)**
• **Nakayama, Osafumi
Kanagawa, 211-8588 (JP)**

(74) Representative: **Hoffmann Eitle
Patent- und Rechtsanwälte PartmbB
Arabellastraße 30
81925 München (DE)**

(56) References cited:
**DE-A1-102011 001 903      US-A1- 2008 238 718
US-A1- 2011 144 859      US-A1- 2012 327 233**

**Description**

FIELD

The embodiments discussed herein are related to an information processing apparatus, a camera mounting angle estimation method, and a program.

BACKGROUND

Technological developments to improve running safety of vehicles by using image processing technology and communications technology have been actively carried out in recent years. One of such development results is a lane departure warning system designed to capture lane markings (white lines) on the road using an in-vehicle camera to estimate the distance between the lane markings and the vehicle based on the captured images, and then warn the driver when the vehicle starts to drift out of its lane. Note that lane departure warning systems may sometimes be referred to as the LDW systems, for short.

The lane departure warning system described above may fail to function properly if the mounting angle of the in-vehicle camera is not set correctly with an acceptable range of error. Therefore, studies have been conducted also in mechanisms for adjusting the mounting angle of the in-vehicle camera. For example, a first technique has been proposed to capture an image of an end portion of a vehicle using an in-vehicle camera to thereby adjust the mounting angle of the in-vehicle camera with reference to the end portion in the captured image. In addition, a second technique has been proposed to detect a steering angle of the handle and adjust the mounting angle of an in-vehicle camera based on an angle made by the orientation of the in-vehicle camera and lane markings when a steering angle is maintained at 0 degree.

Japanese Patent No. 4045862

Japanese Laid-open Patent Publication No. 2001-171544

In the case of a vehicle, such as a truck and a bus, whose end portion (notch) does not extend forward from the front face of the vehicle, the in-vehicle camera is not able to capture an image of the end portion of the vehicle. Therefore, the above-described first technique is not applicable to this type of vehicle to adjust the mounting angle of the in-vehicle camera. In addition, because a vehicle may be running diagonally with respect to lane markings even though the steering angle is maintained at 0 degree, the application of the second technique described above may result in an incorrect adjustment of the mounting angle of the in-vehicle camera.

Document DE 10 2011 0011903 A1 relates to a method for operating an image-based driver assistance system in a vehicle for providing warnings to the driver. Images collected by an image pickup unit and transmitted to an evaluation unit. Lane markings and other data of the vehicle environment are determined from the images. The method involves determining a vertical alignment axis of road markings in an image by an evaluation unit. A connection plane between a central vertical axis of an image pickup unit, e.g. mono camera, and the determined alignment axis is used as a x-z-plane of a static reference coordinate system for evaluation of the image to determine data of a following vehicle. A vanishing point of the road markings in the image is determined. A connection between a midpoint of the pickup unit and the vanishing point is used as an x-axis of the coordinate system. However, document DE 10 2011 0011903 A1 does not deal with the problem of correctly operating the information apparatus, when the camera is mounted with a mounting angle incorrectly set

SUMMARY

In view of the above-described problems, one aspect of the embodiments is to provide an information processing apparatus, a camera mounting angle estimation method, and a program capable of estimating the orientation of an in-vehicle camera with a high degree of accuracy.

According to one embodiment, there is provided an information processing apparatus including a memory means for storing images captured by a camera installed in a vehicle; and a calculating means for detecting, from each of the captured images, lane markings delimiting lanes, and estimating a direction of an optical axis of the camera with reference to the lane markings included in, amongst the captured images, each image captured in a section where the vehicle is traveling parallel to the lane markings.

BRIEF DESCRIPTION OF DRAWINGS

FIG. 1 illustrates an example of an information processing apparatus according to a first embodiment;

FIG. 2 is a first diagram illustrating an example of mounting a lane departure warning system according to a second embodiment and notation of parameters;

FIG. 3 is a second diagram illustrating the example of mounting the lane departure warning system according to the second embodiment and the notation of parameters;

FIG. 4 is a block diagram illustrating an example of functions of the lane departure warning system according to the second embodiment;

FIG. 5 is a first diagram illustrating a mounting angle estimation method according to the second embodiment;

FIG. 6 is a second diagram illustrating the mounting angle estimation method according to the second embodiment;

FIG. 7 is a third diagram illustrating the mounting angle estimation method according to the second embodiment;

FIG. 8 is a first diagram illustrating a processing flow executed by the lane departure warning system according to the second embodiment;

FIG. 9 is a second diagram illustrating the processing flow executed by the lane departure warning system according to the second embodiment;

FIG. 10 is a third diagram illustrating the processing flow executed by the lane departure warning system according to the second embodiment;

FIG. 11 is a fourth diagram illustrating the processing flow executed by the lane departure warning system according to the second embodiment;

FIG. 12 is a fifth diagram illustrating the processing flow executed by the lane departure warning system according to the second embodiment;

FIG. 13 is a sixth diagram illustrating the processing flow executed by the lane departure warning system according to the second embodiment;

FIG. 14 is a seventh diagram illustrating the processing flow executed by the lane departure warning system according to the second embodiment; and

FIG. 15 illustrates an example of hardware for implementing functions of a control device according to the second embodiment.

DESCRIPTION OF EMBODIMENTS

Several embodiments will be described below with reference to the accompanying drawings. In the following description and the accompanying drawings, like reference numerals refer to like elements having substantially the same functions, and a repeated description thereof may be omitted.

(a) First Embodiment

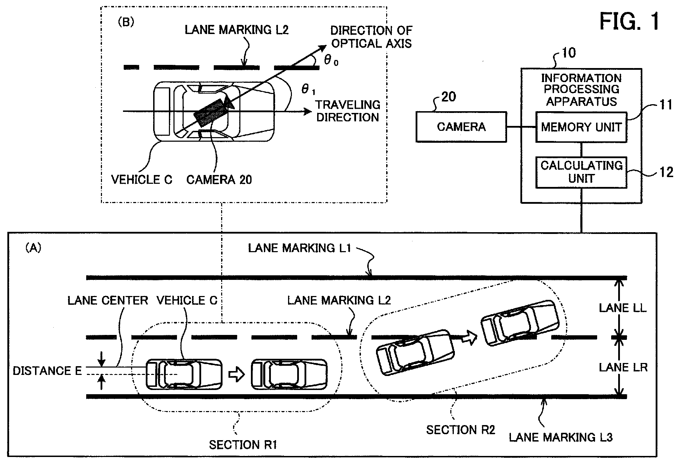

A first embodiment is described next with reference to FIG. 1. FIG. 1 illustrates an example of an information processing apparatus according to the first embodiment. As illustrated in FIG. 1, an information processing apparatus 10 of the first embodiment includes a memory unit 11 and a calculating unit 12. The information processing apparatus 10 is mounted on a vehicle C. For example, the information processing apparatus 10 may be used, in combination with a camera 20 mounted on the vehicle C, as a lane departure warning system designed to warn the driver when the vehicle C starts to drift out of its lane.

The memory unit 11 is a volatile memory such as random access memory (RAM), or a non-volatile memory such as a hard disk drive (HDD) and a flash memory. The calculating unit 12 is a processor, such as a central processing unit (CPU) and a digital signal processor (DSP). Alternatively, the calculating unit 12 may be implemented as an electronic circuit, such as an application specific integrated circuit (ASIC) and a field programmable gate array (FPGA). The calculating unit 12 executes a program stored, for example, in the memory unit 11 or different memory.

The memory unit 11 stores therein images captured by the camera 20 installed in the vehicle C. For example, the camera 20 continuously takes images of the road ahead of the vehicle C and stores a plurality of continuously captured images in the memory unit 11.

According to the example of FIG. 1, the information processing apparatus 10 and the camera 20 are mounted on the vehicle C travelling lanes LL and LR separated by lane markings L1, L2, and L3. The lane markings L1, L2, and L3 are an example of traffic lane lines marking out the lanes LL and LR.

For the purpose of illustration, we assume in the following that two situations take place as illustrated in FIG. 1A: a first situation where the vehicle C travels straight through the lane LR (section R1); and a second situation where the vehicle C makes a lane change from the lane LR to the lane LL (section R2).

Assume also that the camera 20 is installed on the vehicle C in such a manner that the direction of the optical axis of the camera 20 makes an angle $\theta_0$ with the lane marking L2 and an angle $\theta_1$ with the traveling direction of the vehicle C, as illustrated in FIG. 1B. When the traveling direction of the vehicle C is parallel to the lane marking L2, the two angles $\theta_0$ and $\theta_1$ match, as illustrated in FIG. 1B. The distance between the installation position of the camera 20 and the center of the lane (for example, the lane LR), in which the vehicle C is travelling is denoted as E, as illustrated in FIG. 1A. The center of the lane is hereinafter simply referred to as the "lane center".

When the vehicle C is traveling in the lane LR, each image captured by the camera 20 includes the lane markings L2 and L3. The calculating unit 12 detects, from the captured image, the lane markings L2 and L3 delimiting the lanes LL and LR. In addition, based on the captured image, the calculating unit 12 calculates the distance E between the center of the lane LR, in which the vehicle C is traveling, and the vehicle C.

The calculating unit 12 determines that the vehicle C is travelling parallel to the lane markings L2 and L3 when a change in the distance E is smaller than a predetermined threshold. For example, when the vehicle C is traveling in the section R1, the calculating unit 12 determines that the vehicle C is travelling parallel to the lane markings L2 and L3. On the other hand, when the vehicle C is travelling in the section R2, the calculating unit 12 determines that the vehicle C is not traveling parallel to the lane markings L2 and L3.

The calculating unit 12 estimates the direction of the optical axis of the camera 20 with reference to the lane markings L2 and L3 included in each image captured in the section R1, in which the vehicle C is traveling parallel to the lane markings L2 and L3. On the other hand, to estimate the direction of the optical axis of the camera 20, the calculating unit 12 does not use images captured while the vehicle C is traveling in the section R2. For example, since the two angles $\theta_0$ and $\theta_1$ match when the traveling direction of the vehicle C is parallel to the lane marking L2, the direction of the optical axis of the camera 20 with respect to the traveling direction of the vehicle C (the angle $\theta_1$) is obtained by calculating the angle $\theta_0$ from an analysis of captured images.

As described above, the information processing apparatus 10 is capable of estimating the direction of the optical axis of the camera 20 (i.e., the mounting angle of the camera 20) by image processing of captured images. In addition, because the estimation is based on lane markings included in the captured images, the estimation process is executable without a particular part of the vehicle C being included in the field of view of the camera 20. Therefore, the mounting angle of the camera 20 is estimated regardless of the shape of the vehicle C. In addition, there is no need to install estimation markers on the vehicle C, thus preventing the cost increases associated with the estimation process. In addition, the above estimation is made based only on images captured in a section where the vehicle C is traveling parallel to lane markings, which reduces the risk of making an incorrect estimation. The first embodiment has been described thus far.

(b) Second Embodiment

A second embodiment is described next.

[2.1. Example of Mounting Lane Departure Warming System]

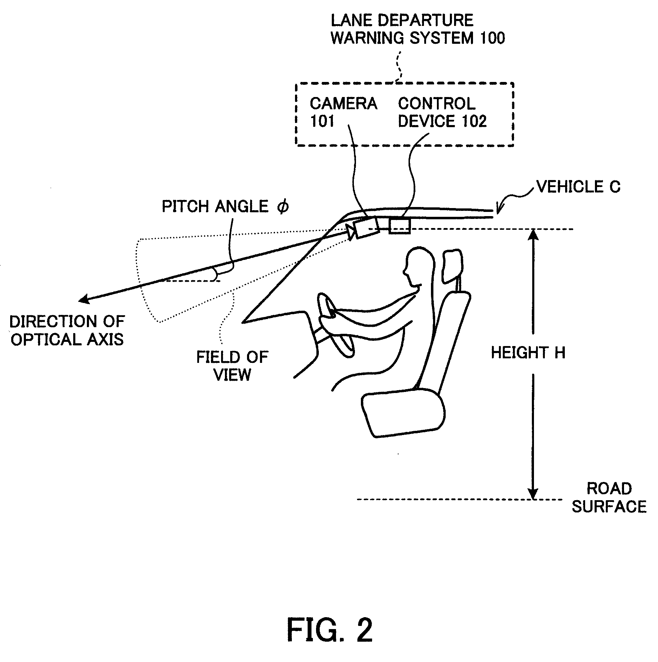

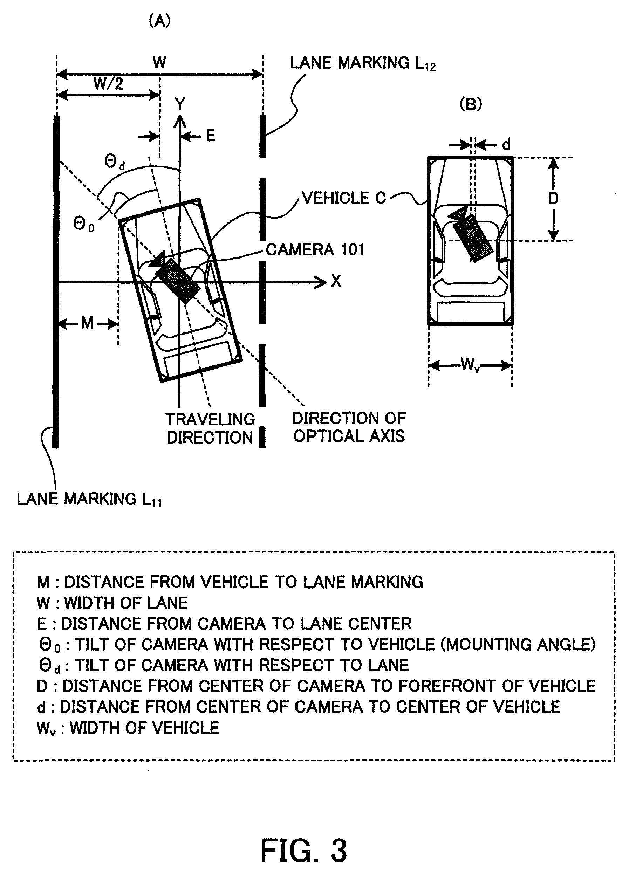

With reference to FIGS. 2 and 3, the following first describes an example of mounting a lane departure warning system 100 and so forth according to the second embodiment. This section also includes the notation of parameters used in the following description. FIG. 2 is a first diagram illustrating an example of mounting the lane departure warning system according to the second embodiment and notation of parameters. FIG. 3 is a second diagram illustrating the example of mounting the lane departure warning system according to the second embodiment and the notation of parameters.

The lane departure warning system 100 includes a camera 101 and a control device 102. The camera 101 is, for example, mounted at a height H from the road surface with a pitch angle $\varphi$, as illustrated in FIG. 2, so as to take an image of the road surface ahead of the vehicle C. Note that the camera 101 may be mounted in such a manner as to take an image of the road surface behind the vehicle C. As the camera 101, a drive recorder, for example, may be used. The camera 101 continuously takes images of the road surface on which the vehicle C is traveling and inputs the continuously captured images to the control device 102.

For convenience of explanation, the following employs an x-y coordinate system with the origin located at the center of the camera 101, as illustrated in FIG. 3A. The distance from the vehicle C to a lane marking is denoted as M, the width of the lane in which vehicle C is traveling is denoted as W, and the distance from the camera 101 to the lane center is denoted as E. In addition, the tilt of the camera 101 with respect to the vehicle C (traveling direction) is denoted as $\Theta_0$, which is hereinafter referred to as the "mounting angle", and the tilt of the camera 101 with respect to the lane (lane marking) is denoted as $\Theta_d$. Further, as illustrated in FIG. 3B, the distance from the center of the camera 101 to the forefront of the vehicle C is denoted as D, the distance from the center of the camera 101 to the center of the vehicle C is denoted as d, and the width of the vehicle C is denoted as $W_v$.

The distance M from the vehicle C to the lane marking is obtained by the following equation (1). For example, the European New Car Assessment Programme (Euro NCAP) and the Japanese Industrial Standards (JIS) impose a requirement of highly accurate calculation of the distance M (for example, with a margin of error of 10 cm) when a lane departure determination is conducted. Highly accurate calculation of the mounting angle $\Theta_0$ of the camera 101 allows the distance M to be calculated with a high degree of accuracy.

Note however that the mounting angle of the camera 101 includes a margin of error. Therefore, highly accurate estimation of the mounting angle $\Theta_0$ of the camera 101 being mounted on the vehicle C contributes to improving the calculation accuracy of the distance M.

$$M = \left(\frac{W}{2} - E\right) - \left(\frac{W_v}{2} - d\right) \cdot \cos(\Theta_d - \Theta_0) - D \cdot \sin(\Theta_d - \Theta_0)$$

$$\cdots (1)$$

The control device 102 has a function of estimating the mounting angle $\Theta_0$ of the camera 101 mounted on the vehicle C with a high degree of accuracy. Based on the fact that the distance from the vehicle C to a lane marking becomes substantially constant when the vehicle C is traveling parallel to the lane marking, the control device 102 is configured to estimate the mounting angle $\Theta_0$ of the camera 101 based on changes in the distance E from the vehicle C to the center of the lane.

The control device 102 chronologically measures the distance E based on captured images and extracts a traveling section with small changes in the distance E (hereinafter referred to as the "parallel section"). Note that the accuracy of a parallel section determination is related to the length of the time of the section in which parallel traveling took place. For example, when parallel traveling is detected from a predetermined number (for example, 20 frames) or more of continuously captured images, a traveling section corresponding to the captured images from which the parallel traveling has been detected is determined as a parallel section with a high level of confidence.

The control device 102 calculates the angle $\Theta_d$ made by the lane marking and the optical axis of the camera 101 based on the images captured by the camera 101 in the parallel section and, then, sets the angle $\Theta_d$ as an estimate value of the mounting angle $\Theta_0$ of the camera 101. For a section where the vehicle C is traveling in a straight line but diagonally with respect to the lane marking, the control device 102 does not estimate the mounting angle $\Theta_0$ based on images captured in the section. This reduces the risk of making an incorrect estimation of the mounting angle $\Theta_0$.

The example of mounting the lane departure warning system 100 and so forth have been described thus far. The following provides further information about functions of the control device 102.

[2.2. Functions of Lane Departure Warning System]

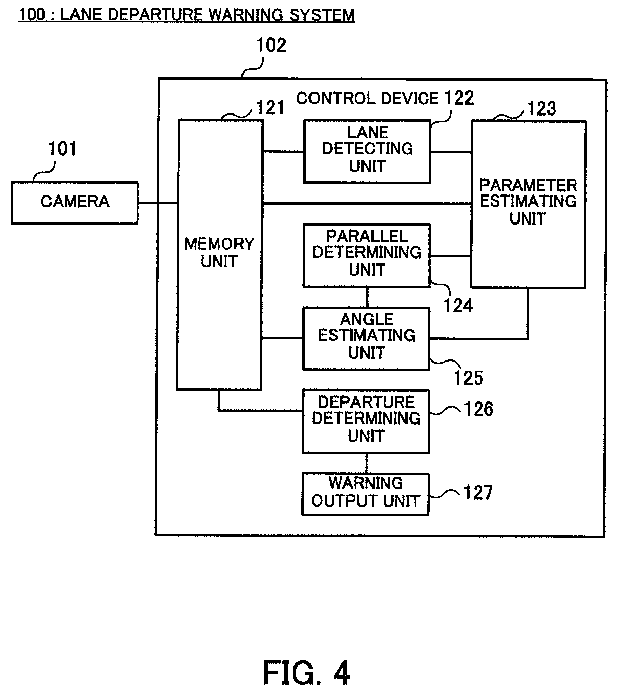

With reference to FIG. 4, functions of the lane departure warning system 100 are described next. FIG. 4 is a block diagram illustrating an example of functions of the lane departure warning system according to the second embodiment. Here, a particular focus is placed on functions of the control device 102 amongst the functions of the lane departure warning system 100.

As illustrated in FIG. 4, the control device 102 includes a memory unit 121, a lane detecting unit 122, a parameter estimating unit 123, a parallel determining unit 124, an angle estimating unit 125, a departure determining unit 126, and a warning output unit 127. Note that the functions of the memory unit 121 may be implemented using a volatile memory such as RAM, or a non-volatile memory such as a HDD and a flash memory. The functions of the lane detecting unit 122, the parameter estimating unit 123, and the parallel determining unit 124 may be implemented using a processor such as a CPU and a DSP, or alternatively, may be implemented using an electronic circuit, such as an ASIC and an FPGA.

In addition, the functions of the angle estimating unit 125, the departure determining unit 126, and the warning output unit 127 may be implemented using a processor such as a CPU and a DSP, or alternatively, may be implemented using an electronic circuit, such as an ASIC and an FPGA. The lane detecting unit 122, the parameter estimating unit 123, the parallel determining unit 124, the angle estimating unit 125, the departure determining unit 126, and the warning output unit 127 execute programs stored, for example, in the memory unit 121 or different memory.

The memory unit 121 stores therein images captured by the camera 101. The lane detecting unit 122 extracts edge images from captured images stored in the memory unit 121. In addition, the lane detecting unit 122 detects lane markings using each of the extracted edge images. Information of the lane markings detected by the lane detecting unit 122 is input to the parameter estimating unit 123.

Based on the information of the lane markings detected by the lane detecting unit 122, the parameter estimating unit 123 calculates the angle $\Theta_d$ made by the direction of the optical axis of the camera 101 and a lane marking, the distance E, and the like. The parameter estimating unit 123 also calculates a change $\Delta E$ in the distance E. For example, with reference to a distance $E(t_0)$ obtained based on an image captured at time $t_0$, the parameter estimating unit 123 calculates the change $\Delta E$ in the distance E based on an image captured at time t, using the following equation (2).

$$\Delta E(t) = |E(t) - E(t_0)| \qquad \ldots (2)$$

The change ΔE calculated by the parameter estimating unit 123 is input to the parallel determining unit 124. The angle $\Theta_d$ calculated by the parameter estimating unit 123 is input to the angle estimating unit 125. The parallel determining unit 124 holds the change ΔE input from the parameter estimating unit 123. In addition, the parallel determining unit 124 compares the change ΔE with a threshold $Th_E$. If the change ΔE is less than the threshold $Th_E$, the parallel determining unit 124 determines that the vehicle C is travelling parallel to the lane markings. That is, the parallel determining unit 124 determines that the vehicle C is traveling in a parallel section.

The determination result of the parallel determining unit 124 is input to the angle estimating unit 125. The angle estimating unit 125 determines whether the number of images captured in the parallel section is more than or equal to a threshold $T_0$'. If the number of captured images is more than or equal to the threshold $T_0$', the angle estimating unit 125 estimates the angle $\Theta_0$ made by the direction of the optical axis of the camera 101 and the traveling direction of the vehicle C, using the angles $\Theta_d$ obtained in the parallel section. For example, the angle estimating unit 125 obtains, as the angle $\Theta_0$, a statistical value (for example, the average or mode) of the angles $\Theta_d$ calculated based on individual images captured in the parallel section. The angle $\Theta_0$ estimated by the angle estimating unit 125 is stored in the memory unit 121.

Based on parameters including the distance E and the angle $\Theta_d$ calculated by the parameter estimating unit 123 and the angle $\Theta_0$ estimated by the angle estimating unit 125, the departure determining unit 126 calculates the distance M from the vehicle C to the lane marking (see equation (1) above). Note however that the width W of the lane has been calculated by the parameter estimating unit 123 and then stored in the memory unit 121. In addition, the width $W_v$ of the vehicle C, the distances d and D associated with the mounting position of the camera 101 are stored in the memory unit 121 in advance. The departure determining unit 126 determines whether the vehicle C begins to cross out of the lane based on the calculated distance M.

When determining that the vehicle C begins to cross out of the lane, the departure determining unit 126 notifies the warning output unit 127 accordingly. Upon receiving the notification, the warning output unit 127 notifies the driver of the vehicle C beginning to cross out of the lane. For example, the warning output unit 127 alerts the driver with an audible alarm or a visual image or text display.

The functions of the lane departure warning system 100 have been described thus far. Note that the functions of the parallel determining unit 124 and the angle estimating unit 125 are modifiable accordingly, as described later.

[2.3. Mounting Angle Estimation Method]

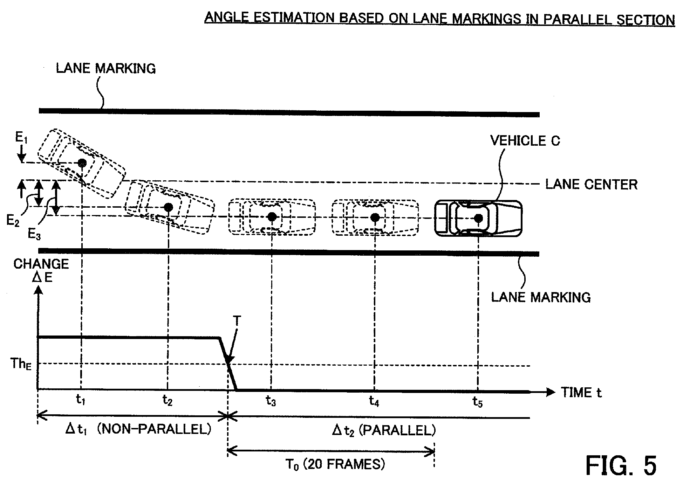

A mounting angle estimation method according to the second embodiment is described next with reference to FIGS. 5 to 7.

(2.3.1. Angle Estimation based on Lane Markings in Parallel Section)

First, a method for estimating the angle $\Theta_0$ based on lane markings in a parallel section (hereinafter referred to as Estimation Method #1) is described with reference to FIG. 5. FIG. 5 is a first diagram illustrating a mounting angle estimation method according to the second embodiment. FIG. 5 schematically illustrates a situation where the vehicle C is traveling from time t1 to time t5 and transition of the change ΔE over the time frame.

According to the example of FIG. 5, the vehicle C moves from the left side of the lane to the right side in period $\Delta t_1$ including times $t_1$ and $t_2$. Then, in period $\Delta t_2$ including times $t_3$, $t_4$ and $t_5$, the vehicle C is traveling straight on the right side of the lane. In this case, the change ΔE in period $\Delta t_1$ exceeds the threshold $Th_E$. On the other hand, the change ΔE in period $\Delta t_2$ is below the threshold $Th_E$. That is, the section corresponding to period $\Delta t_1$ is not a parallel section (hereinafter referred to as the "non-parallel section") while the section corresponding to period $\Delta t_2$ is a parallel section.

The angle estimating unit 125 starts counting the number of images continuously captured in the parallel section (the number of frames) at start time T of the parallel section, and then stores the angle $\Theta_d$ obtained based on each of the captured images. When the number of counts reaches the threshold $T_0$' (for example, 20 frames), the angle estimating unit 125 estimates the mounting angle $\Theta_0$ of the camera 101 using the stored angles $\Theta_d$. On the other hand, when a shift is made to a non-parallel section before the number of counts reaches the threshold $T_0$' (i.e., when the change ΔE exceeds the threshold $Th_E$ along the way), the angle estimating unit 125 discards the stored angles $\Theta_d$.

According to the example of FIG. 5, the number of images continuously captured in period $\Delta t_2$ corresponding to the parallel section exceeds the threshold $T_0$'. Therefore, the mounting angle $\Theta_0$ of the camera 101 is estimated using the stored angles $\Theta_d$ obtained based on images captured since start time T of the parallel section. Estimation Method #1 has been described thus far.

# EP 2 879 117 B1

(2.3.2. Angle Estimation based on Lane Markings in Plurality of Short Parallel Sections)

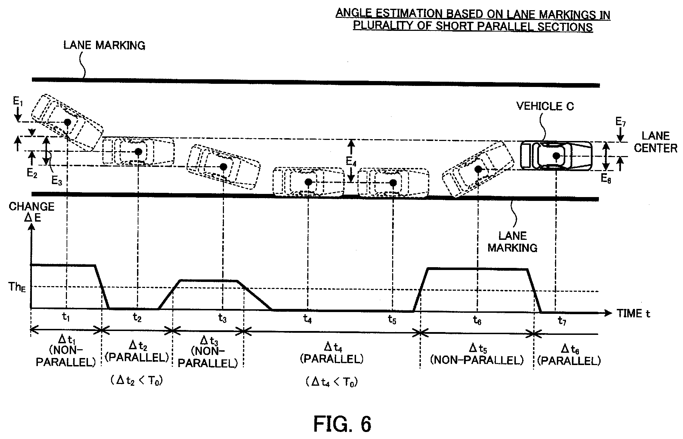

A method for estimating the angle $\Theta_0$ based on lane markings in a plurality of short parallel sections (hereinafter referred to as Estimation Method #2) is described next with reference to FIG. 6. FIG. 6 is a second diagram illustrating the mounting angle estimation method according to the second embodiment. FIG. 6 schematically illustrates a situation where the vehicle C is traveling from time $t_1$ to time $t_7$ and transition of the change $\Delta E$ over the time frame.

According to the example of FIG. 6, the vehicle C moves from the left side toward the center of the lane in period $\Theta t_1$ including time $t_1$. Then, in period $\Delta t_2$ including time $t_2$, the vehicle C is traveling straight near the center of the lane. Note however that period $\Delta t_2$ is short and the counted number of images captured in period $\Delta t_2$ is less than the threshold $T_0$'. In period $\Delta t_3$ including time $t_3$, the vehicle C then moves from an area near the lane center to the right side of the lane. Subsequently, in period $\Delta t_4$ including times $t_4$ and $t_5$, the vehicle C is traveling straight on the right side of the lane. Note however that period $\Delta t_4$ is short and the counted number of images captured in period $\Delta t_4$ is less than the threshold $T_0$'. In period $\Delta t_5$ including time $t_6$, the vehicle C then moves from the right side toward the center of the lane. Then, in period $\Delta t_6$ including time $t_7$, the vehicle C is traveling straight near the center of the lane.

By comparing the change $\Delta E$ and the threshold $Th_E$, the sections corresponding to periods $\Delta t_1$, $\Delta t_3$, and $\Delta t_5$ are determined as non-parallel sections while the sections corresponding to periods $\Delta t_2$, $\Delta t_4$, and $\Delta t_6$ are determined as parallel sections. Note however that because the sections of periods $\Delta t_2$ and $\Delta t_4$ are short parallel sections, the counted number of images captured in each of periods $\Delta t_2$ or $\Delta t_4$ is less than the threshold $T_0$'. In fact, parallel sections with sufficient length may not be easily detected due to road conditions, quality of captured images or the like. In such a case, if the above described

Estimation Method #1 is applied, it may take a while until the mounting angle $\Theta_0$ of the camera 101 is estimated. In view of this, Estimation Method #2 uses a plurality of short parallel sections.

The angle estimating unit 125 starts counting the number of images continuously captured in the parallel section (the number of frames) at start time $T_1$ of the parallel section (period $\Delta t_2$), and then stores the angle $\Theta_d$ obtained based on each of the captured images. Further, the angle estimating unit 125 starts counting the number of images continuously captured in the parallel section (the number of frames) at start time $T_3$ of the parallel section (period $\Delta t4$), and then stores the angle $\Theta_d$ obtained based on each of the captured images. When the sum of the counted number reaches the threshold $T_0$', the angle estimating unit 125 estimates the mounting angle $\Theta_0$ of the camera 101 using the stored angles $\Theta_d$.

Note however that if a shift is made to a non-parallel section (i.e., when the change $\Delta E$ exceeds the threshold $Th_E$ along the way) before the number of images counted for each short parallel section reaches a threshold $T_1$' (for example, five frames), the angle estimating unit 125 may discard the stored angles $\Theta_d$. This excludes excessively short parallel sections from the estimation, thus avoiding significantly reducing the accuracy of estimating the mounting angle $\Theta_0$.

Estimation Method #2 has been described thus far. According to Estimation Method #2, it is possible to estimate the mounting angle $\Theta_0$ of the camera 101 even when no long parallel sections take place.

(2.3.3. Responses to Degradation and Other Aspects of Lane Markings)

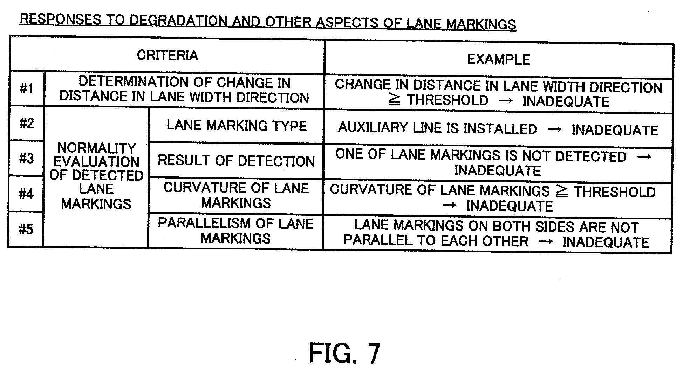

Responses to degradation and other aspects of lane markings are described next with reference to FIG. 7. FIG. 7 is a third diagram illustrating the mounting angle estimation method according to the second embodiment.

Faded or partially disconnected lane markings are seen on some busy road with a lot of traffic. In such a case, detection of the lane markings may fail or incorrect estimation of a parameter may take place. In view of this, in order to detect each parallel section, the normality of detected lanes is evaluated using criteria illustrated in FIG. 7, in addition to transition of the change $\Delta E$.

As illustrated in FIG. 7, criteria of the normality evaluation include, for example, lane marking type, result of detection (the presence or absence of a lane marking), curvature of lane markings, and parallelism of lane markings. Some lane marking types are, for example, a lane marking being a single solid white line and a lane marking along which a dashed auxiliary line runs. Because a false detection of a lane marking may occur when an auxiliary line is placed, images captured in a section where an auxiliary line is installed are not used for the process of estimating the mounting angle $\Theta_0$.

While a lane marking on one side of the vehicle C is detected, a lane marking on the other side may not be detected. In such a case, the distance E from the vehicle C to the lane center is not able to be calculated. Therefore, images captured in a section from which one of the lane markings has not been detected are not used for the process of estimating the mounting angle $\Theta_0$.

When the lane markings are curve lines, the two angles $\Theta_d$ and $\Theta_0$ do not match even if the vehicle C is traveling parallel to the lane markings. Therefore, images captured in a section where the curvature of the lane markings is more than or equal to a predetermined threshold are not used for the process of estimating the mounting angle $\Theta_0$. Further, when the lane width changes in the traveling direction of the vehicle C, a parallel section may not be determined correctly.

Therefore, images captured in a section where the lane markings on both sides of the vehicle C are not parallel to each other are not used for the process of estimating the mounting angle $\Theta_0$.

The responses to degradation and other aspects of lane markings have been described thus far. The exception handling described above reduces the possibility of incorrect estimation of the mounting angle $\Theta_0$ associated with, for example, a false detection of lane markings, thus improving the accuracy of the estimation.

[2.4. Processing Flows]

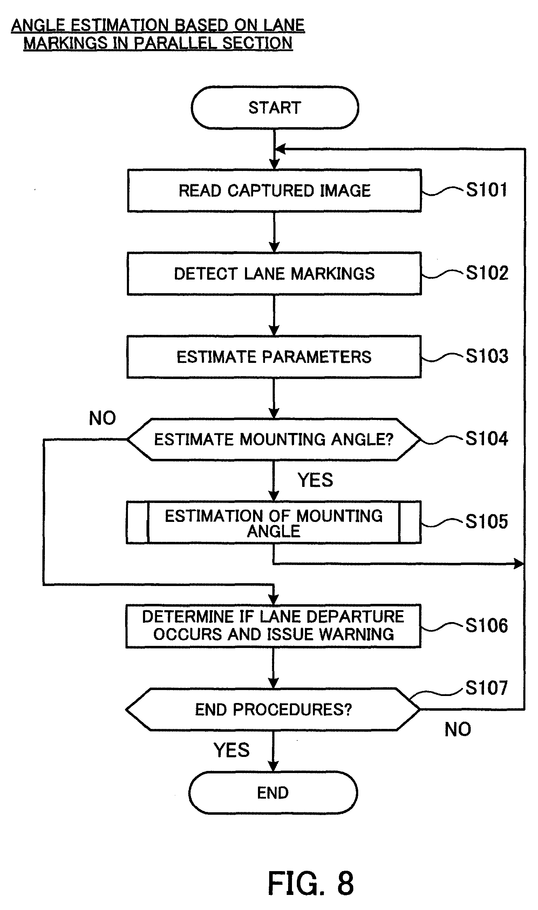

Processing flows of the lane departure warning system 100 are described next with reference to FIGS. 8 to 14.

(2.4.1. Angle Estimation based on Lane Markings in Parallel Section)

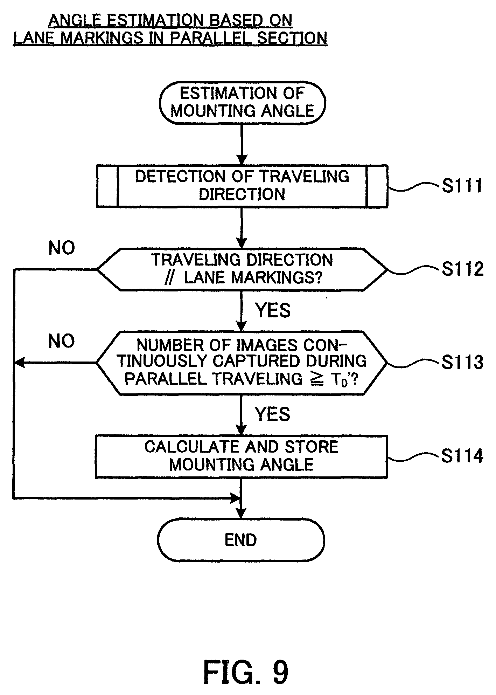

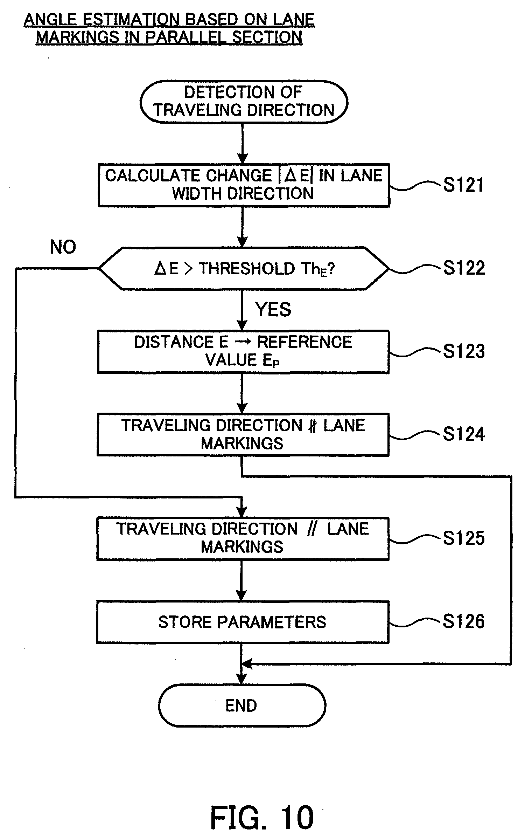

A processing flow of angle estimation based on lane markings in a parallel section is described first, with reference to FIGS. 8 to 10. FIG. 8 is a first diagram illustrating a processing flow executed by a lane departure warning system according to the second embodiment. FIG. 9 is a second diagram illustrating the processing flow executed by the lane departure warning system according to the second embodiment. FIG. 10 is a third diagram illustrating the processing flow executed by the lane departure warning system according to the second embodiment.

(Overall Processing Flow)

An overall processing flow is described first with reference to FIG. 8.

(Step S101) The lane detecting unit 122 reads a captured image stored in the memory unit 121. Note that the memory unit 121 stores therein images captured by the camera 101.

(Step S102) The lane detecting unit 122 extracts an edge image from the image read from the memory unit 121. For example, the lane detecting unit 122 detects a boundary (edge) between each lane marking consisting of a white line and the road surface, and generates an edge image based on the detected edges. Note that the edge detection may be achieved by contour extraction using a Laplacian of Gaussian (LoG) filter, for example.

In addition, the lane detecting unit 122 detects lane markings using the extracted edge image. For example, the lane detecting unit 122 performs a labeling process on the edge image, and then removes noise components in consideration of directions, shapes and the like of lines. Subsequently, the lane detecting unit 122 performs a linking process to thereby detect the lane markings. Note however that a method other than this lane detecting method may be employed instead. Information of the lane markings detected by the lane detecting unit 122 is input to the parameter estimating unit 123.

(Step S103) Based on the information of the lane markings detected by the lane detecting unit 122, the parameter estimating unit 123 calculates the angle $\Theta_d$ made by the direction of the optical axis of the camera 101 and a lane marking, the distance E and the like.

Note that the information of the lane markings input from the lane detecting unit 122 is position information on the captured image. Therefore, in order to calculate positions of the lane markings on the road surface and the distance E, the parameter estimating unit 123 models the lane position on the road surface and then converts the position information on the captured image to position information on the road surface.

For example, the parameter estimating unit 123 repeats linear approximation using a model represented by the following equation (3) to thereby calculate parameters of the position information on the road surface from the position information on the captured image. Note here that position coordinates on the captured image is (x, y), the focal length of the camera 101 is f, the curvature of the lane markings is c, and a constant to distinguish between a right lane and a left lane is k (-1 for the left lane, and +1 for the right lane).

$$x = \frac{1}{2} \frac{c \cdot f^2 \cdot H}{(y + f \cdot \phi)} + \left( k \cdot \frac{W}{2} + E \right) \cdot \frac{y + f \cdot \phi}{H} + f \cdot \Theta_0$$

$$\cdots (3)$$

In addition, the parameter estimating unit 123 calculates the change $\Delta E$ in the distance E. For example, with reference to the distance $E(t_0)$ obtained based on an image captured at time to, the parameter estimating unit 123 calculates the change $\Delta E(t)$ in the distance E based on an image captured at time t using the equation (2) above. The

change $\Delta E$ calculated by the parameter estimating unit 123 is input to the parallel determining unit 124. In addition, the angle $\Theta_d$ calculated by the parameter estimating unit 123 is input to the angle estimating unit 125.

(Step S104) The control device 102 determines whether to estimate the mounting angle $\Theta_0$ of the camera 101. For example, if the estimation of the mounting angle $\Theta_0$ has been completed (if a completion flag to be described later has been set), the control device 102 determines not to estimate the mounting angle $\Theta_0$ of the camera 101. On the other hand, if the estimation of the mounting angle $\Theta_0$ has yet to be completed, the control device 102 determines to estimate the mounting angle $\Theta_0$ of the camera 101. When the mounting angle $\Theta_0$ of the camera 101 is to be estimated, the process moves to step S105. On the other hand, when the mounting angle $\Theta_0$ of the camera 101 is not to be estimated, the process moves to step S106.

(Step S105) The parallel determining unit 124 holds the change $\Delta E$ input from the parameter estimating unit 123. In addition, the parallel determining unit 124 compares the change $\Delta E$ with the threshold $Th_E$. If the change $\Delta E$ is less than the threshold $Th_E$, the parallel determining unit 124 determines that the vehicle C is travelling parallel to the lane markings. That is, the parallel determining unit 124 determines that the vehicle C is traveling in a parallel section. The determination result of the parallel determining unit 124 is input to the angle estimating unit 125.

The angle estimating unit 125 determines whether the number of images captured in the parallel section is more than or equal to the threshold $T_0'$. If the number of captured images is more than or equal to the threshold $T_0'$, the angle estimating unit 125 estimates the angle $\Theta_0$ made by the direction of the optical axis of the camera 101 and the traveling direction of the vehicle C, using the angles $\Theta_d$ obtained in the parallel section. For example, the angle estimating unit 125 obtains, as the angle $\Theta_0$, a statistical value (for example, the average or mode) of the angles $\Theta_d$ calculated based on individual images captured in the parallel section. The angle $\Theta_0$ estimated by the angle estimating unit 125 is stored in the memory unit 121. After completing step S105, the process moves to step S101.

(Step S106) Based on parameters including the distance E and the angle $\Theta_d$ calculated by the parameter estimating unit 123 and the angle $\Theta_0$ estimated by the angle estimating unit 125, the departure determining unit 126 calculates the distance M from the vehicle C to the lane marking (see equation (1) above). The departure determining unit 126 determines whether the vehicle C begins to cross out of the lane based on the calculated distance M. If the distance M is large, the vehicle C is less likely to cross out of the lane. On the other hand, if the distance M is small, the vehicle C is likely to cross out of the lane.

When determining that the vehicle C begins to cross out of the lane, the departure determining unit 126 notifies the warning output unit 127 accordingly. Upon receiving the notification, the warning output unit 127 notifies the driver of the vehicle C beginning to cross out of the lane. For example, the warning output unit 127 alerts the driver with an audible alarm or a visual image or text display.

(Step S107) The control device 102 determines whether to end a series of procedures illustrated in FIG. 8. For example, when the power to the lane departure warning system 100 is turned off, the control device 102 ends the series of procedures in FIG. 8. On the other hand, when the control device 102 continues the series of procedures in FIG. 8, the process moves to step S101.

(Estimation of Mounting Angle: step S105)

The details of step S105 are further described next with reference to FIG. 9.

(Step S111) The parallel determining unit 124 detects the traveling direction of the vehicle C. For example, based on the change $\Delta E$ input from the parameter estimating unit 123, the parallel determining unit 124 determines whether the traveling direction of the vehicle C is parallel to the lane markings.

If the change $\Delta E$ is less than the threshold $Th_E$, the parallel determining unit 124 determines that the traveling direction of the vehicle C is parallel to the lane markings. On the other hand, if the change $\Delta E$ is not less than the threshold $Th_E$, the parallel determining unit 124 determines that the traveling direction of the vehicle C is not parallel to the lane markings.

(Step S112) When, in step S111, the traveling direction of the vehicle C is determined to be parallel to the lane markings, the process moves to step S113. On the other hand, when, in step S111, the traveling direction of the vehicle C is determined not to be parallel to the lane markings, a series of procedures illustrated in FIG. 9 ends.

(Step S113) The angle estimating unit 125 determines whether the number of images continuously captured in a section where the traveling direction of the vehicle C is parallel to the lane markings (i.e., parallel section) is more than or equal to the threshold $T_0'$.

Note that the threshold $T_0'$ is an experimentally obtained value (for example, 20) which allows the mounting angle $\Theta_0$ of the camera 101 to be calculated with desired accuracy. When the number of images continuously captured in the parallel section is more than or equal to the threshold $T_0'$, the process moves to step S114. On the other hand, when the number of images continuously captured in the parallel section is not more than or equal to the threshold $T_0'$, the series of procedures of FIG. 9 ends.

(Step S114) Using the angles $\Theta_d$ obtained in the parallel section, the angle estimating unit 125 estimates the

angle $\Theta_0$ made by the direction of the optical axis of the camera 101 and the traveling direction of the vehicle C. For example, the angle estimating unit 125 obtains, as the angle $\Theta_0$, a statistical value (for example, the average or mode) of the angles $\Theta_d$ calculated based on individual images captured in the parallel section. The angle $\Theta_0$ estimated by the angle estimating unit 125 is stored (saved) in the memory unit 121. In this regard, the angle estimating unit 125 sets a completion flag and stores the set information in the memory unit 121. After completing step S114, the series of procedures of FIG. 9 ends.

(Detection of Traveling Direction: step S111)

The details of step S111 are further described next with reference to FIG. 10.

(Step S121) Based on the information of the lane markings detected by the lane detecting unit 122, the parameter estimating unit 123 calculates the angle $\Theta_d$ made by the direction of the optical axis of the camera 101 and a lane marking, the distance E and the like. In this regard, based on the equation (3) above, the parameter estimating unit 123 models the lane position on the road surface in order to calculate positions of the lane markings on the road surface and the distance E, and then converts the position information on the captured image to position information on the road surface.

In addition, the parameter estimating unit 123 calculates the change $\Delta E$ in the distance E. For example, with reference to the distance $E(t_0)$ (Ep to be described later) obtained based on an image captured at time $t_0$, the parameter estimating unit 123 calculates the change $\Delta E(t)$ in the distance E based on an image captured at time t (a point in time for which parallel traveling is judged), using the equation (2) above. The change $\Delta E$ calculated by the parameter estimating unit 123 is input to the parallel determining unit 124.

(Step S122) The parallel determining unit 124 holds the change $\Delta E$ input from the parameter estimating unit 123. In addition, the parallel determining unit 124 compares the change $\Delta E$ with the threshold $Th_E$ to thereby determine whether the change $\Delta E$ exceeds the threshold $Th_E$.

Note that the threshold $Th_E$ is an experimentally obtained value (for example, 50 mm) which allows the mounting angle $\Theta_0$ of the camera 101 to be estimated with desired accuracy. When the change $\Delta E$ exceeds the threshold $Th_E$, the process moves to step S123. On the other hand, when the change $\Delta E$ does not exceed the threshold $Th_E$, the process moves to step S125.

(Steps S123 and S124) The parallel determining unit 124 sets the distance E used in step S121 as a reference distance $E_P$. In addition, the parallel determining unit 124 determines that the traveling direction of the vehicle C is not parallel to the lane markings. After completing steps S123 and S124, a series of procedures illustrated in FIG. 10 ends. Using the distance E in the lane width direction in the above-described manner allows the determination of whether the traveling direction of the vehicle C is parallel to the lane markings even when the vehicle C is running at low speed.

(Steps S125 and S126) The parallel determining unit 124 determines that the traveling direction of the vehicle C is parallel to the lane markings. In this case, parameters, including the distance E and the angle $\Theta_d$, calculated by the parameter estimating unit 123 are stored (saved) in the memory unit 121. After completing steps S125 and S126, the series of procedures of FIG. 10 ends.

The processing flow of angle estimation based on lane markings in a parallel section has been described thus far.

(2.4.2. Angle Estimation based on Lane Markings in Plurality of Short Parallel Sections)

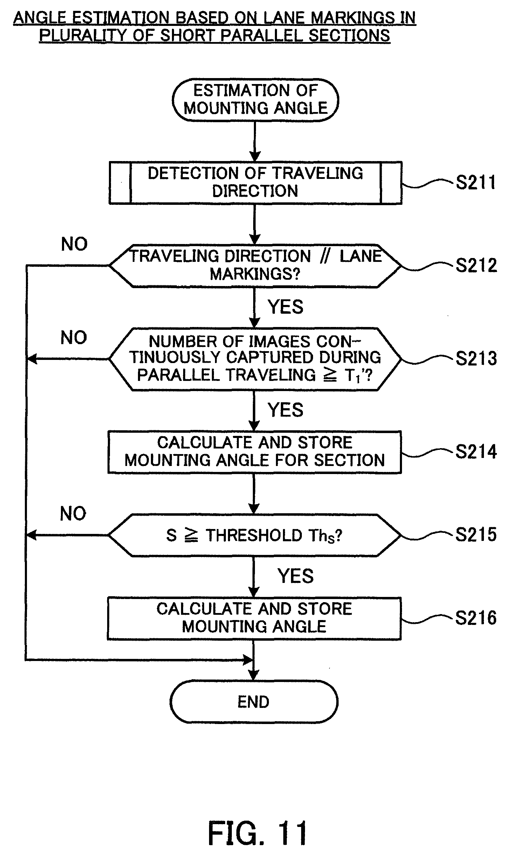

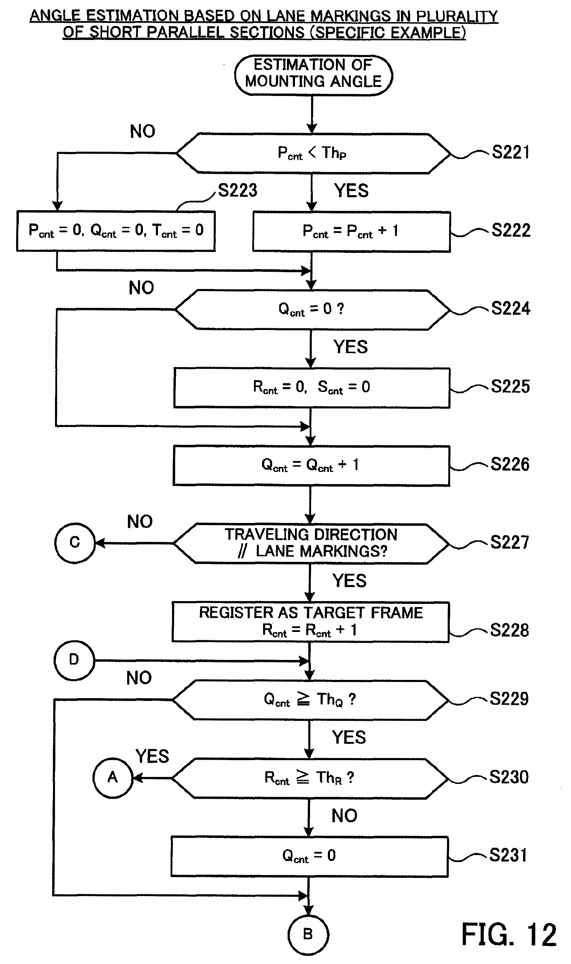

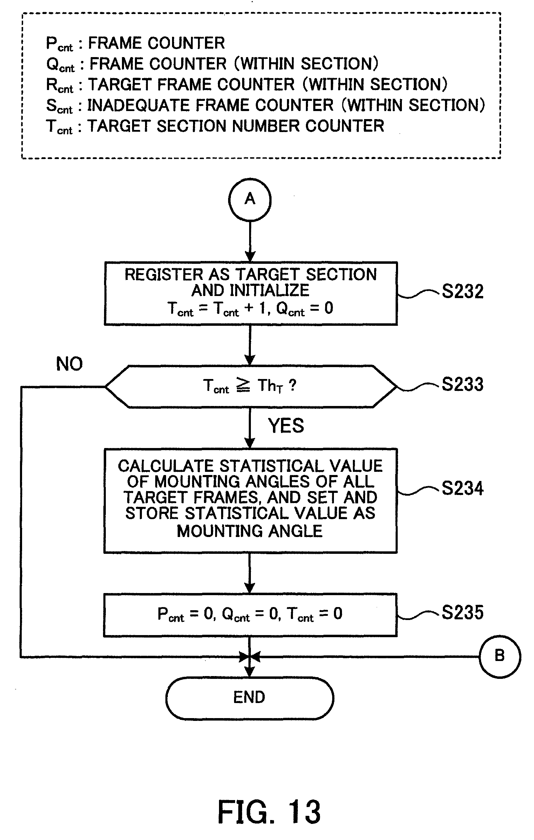

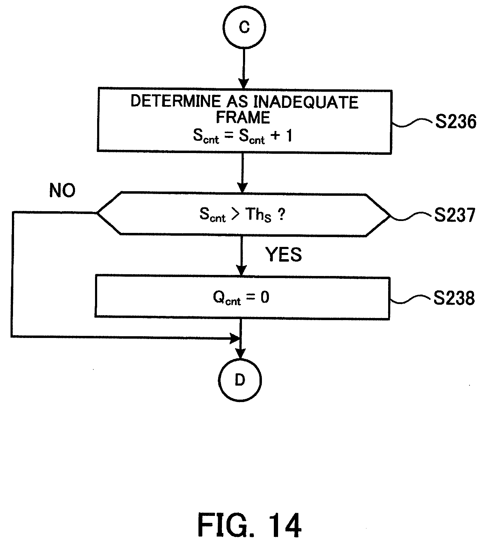

A processing flow of angle estimation based on lane markings in a plurality of short parallel sections is described next, with reference to FIGS. 11 to 14. FIG. 11 is a fourth diagram illustrating the processing flow executed by the lane departure warning system according to the second embodiment. FIG. 12 is a fifth diagram illustrating the processing flow executed by the lane departure warning system according to the second embodiment. FIG. 13 is a sixth diagram illustrating the processing flow executed by the lane departure warning system according to the second embodiment. FIG. 14 is a seventh diagram illustrating the processing flow executed by the lane departure warning system according to the second embodiment.

(Estimation of Mounting Angle: step S105)

This processing flow differs from the above-described processing flow of angle estimation based on lane markings in a parallel section in step S105 amongst the steps illustrated in FIG. 8. Therefore, the detailed description of the overall processing flow is omitted, and a processing flow corresponding to step S105 is described next with reference to FIG. 11.

(Step S211) The parallel determining unit 124 detects the traveling direction of the vehicle C. For example, based on the change $\Delta E$ input from the parameter estimating unit 123, the parallel determining unit 124 determines whether the traveling direction of the vehicle C is parallel to the lane markings.

If the change $\Delta E$ is less than the threshold $Th_E$, the parallel determining unit 124 determines that the traveling direction of the vehicle C is parallel to the lane markings. On the other hand, if the change $\Delta E$ is not less than the threshold $Th_E$, the parallel determining unit 124 determines that the traveling direction of the vehicle C is not parallel to the lane markings.

(Step S212) When, in step S211, the traveling direction of the vehicle C is determined to be parallel to the lane markings, the process moves to step S213. On the other hand, when, in step S211, the traveling direction of the vehicle C is determined not to be parallel to the lane markings, a series of procedures illustrated in FIG. 11 ends.

(Step S213) The angle estimating unit 125 determines whether the number of images continuously captured in a section where the traveling direction of the vehicle C is parallel to the lane markings (i.e., parallel section) is more than or equal to the threshold $T_1'$. Note that the threshold $T_1'$ is set to a value less than the threshold To' above ($T_1'$ < $T_0'$; for example, $T_1' = 5$). When the number of images continuously captured in the parallel section is more than or equal to the threshold $T_1'$, the process moves to step S214. On the other hand, when the number of images continuously captured in the parallel section is not more than or equal to the threshold $T_1'$, the series of procedures of FIG. 11 ends.

Note that as a modification of step S213, for example, a threshold T2' ($T_1'$ < $T_2'$ < $T_0'$) is set, and the process moves to step S214 if, amongst $T_2'$ continuously captured images, the number of images continuously captured in the parallel section is more than or equal to $T_1'$. If, amongst $T_2'$ continuously captured images, the number of images continuously captured in the parallel section is not more than or equal to $T_1'$, the series of procedures of FIG. 11 ends. The threshold $T_2'$ is a value experimentally determined. For example, $T_2' = 7$ and $T_1' = 5$.

(Step S214) Using the angles $\Theta_d$ obtained in the parallel section, the angle estimating unit 125 estimates the angle $\Theta_0$ made by the direction of the optical axis of the camera 101 and the traveling direction of the vehicle C. For example, the angle estimating unit 125 obtains, as the angle $\Theta_0$, a statistical value (for example, the average or mode) of the angles $\Theta_d$ calculated based on individual images captured in the parallel section. The angle $\Theta_0$ estimated by the angle estimating unit 125 is stored (saved) in the memory unit 121.

(Step S215) The angle estimating unit 125 determines whether the number of parallel sections, S, in each of which the number of images continuously captured is more than or equal to the threshold $T_1'$, (or the number of angles $\Theta_0$ stored in the memory unit 121) is more than or equal to a threshold $Th_s$. Note that the threshold $Th_s$ is an experimentally determined value (for example, $Th_s = 7$) which allows the mounting angle $\Theta_0$ of the camera 101 to be calculated with desired accuracy. If the number of parallel sections S is more than or equal to the threshold $Th_s$, the process moves to step S216. On the other hand, if the number of parallel sections S is not more than or equal to the threshold $Th_s$, the series of procedures of FIG. 11 ends.

(Step S216) The angle estimating unit 125 calculates a statistical value (for example, the average or mode) of a plurality of mounting angles $\Theta_0$ stored in the memory unit 121 and obtains the calculated statistical value as an estimated mounting angle $\Theta_0$. The mounting angle $\Theta_0$ of the camera 101 obtained as the estimation result is stored in the memory unit 121. After completing step S216, the series of procedures of FIG. 11 ends.

(Specific Example)

With reference to FIGS. 12 to 14, the processing flow illustrated in FIG. 11 is further described in detail with a specific example (the processing flow based on transitions of counters).

$P_{cnt}$, $Q_{cnt}$, $R_{cnt}$, $S_{cnt}$, and $T_{cnt}$ are counters. In addition, $Th_P$, $Th_Q$, $Th_R$, $Th_S$, and $Th_T$ are thresholds corresponding to $P_{cnt}$, $Q_{cnt}$, $R_{cnt}$, $S_{cnt}$, and $T_{cnt}$, respectively. All the counters are initialized to a value of 0. Assume here that the thresholds are set as follows: $Th_P = 11$, $Th_Q = 3$, $Th_R = 2$, $Th_S = 1$, and $Th_T = 3$.

(Step S221) The angle estimating unit 125 determines whether the counter $P_{cnt}$ indicates a value less than the threshold $Th_P$. Note that the counter $P_{cnt}$ is sometimes referred to as the frame counter. If the value of the counter $P_{cnt}$ is less than the threshold $Th_P$, the process moves to step S222. On the other hand, if the value of the counter $P_{cnt}$ is not less than the threshold Thp, the process moves to step S223.

(Step S222) The angle estimating unit 125 increases the value of the frame counter $P_{cnt}$ by 1. After completing step S222, the process moves to step S224.

(Step S223) The angle estimating unit 125 initializes each of the counters $P_{cnt}$, $Q_{cnt}$, and $T_{cnt}$ to 0. This means that initialization is performed when the process of estimating the mounting angle $\Theta_0$ is not completed within $Th_P$. After completing step S223, the process moves to step S224.

(Step S224) The angle estimating unit 125 determines whether the counter $Q_{cnt}$ indicates a value of 0. Note that the counter $Q_{cnt}$ is sometimes referred to as the frame counter. If the value of the counter $Q_{cnt}$ is 0, the process moves to step S225. On the other hand, if the value of the counter $Q_{cnt}$ is not 0, the process moves to step S226.

(Step S225) The angle estimating unit 125 initializes each of the counters $R_{cnt}$ and $S_{cnt}$ to 0. After completing step S225, the process moves to step S226.

(Step S226) The angle estimating unit 125 increases the value of the counter $Q_{cnt}$ by 1.

(Step S227) The angle estimating unit 125 determines whether the traveling direction of the vehicle C is parallel to the lane markings. If the traveling direction of the vehicle C is parallel to the lane markings, the process moves to step S228. On the other hand, if the traveling direction of the vehicle C is not parallel to the lane markings, the process moves to step S236 of FIG. 14.

(Step S228) The angle estimating unit 125 registers the captured image as a target frame. In addition, the angle estimating unit 125 increases the value of the counter $R_{cnt}$ by 1. Note that the counter $R_{cnt}$ is a counter indicating the number of captured images registered as target frames, and is sometimes referred to as the target frame counter.

(Step S229) The angle estimating unit 125 determines whether the counter $Q_{cnt}$ indicates a value more than or equal to the threshold $Th_Q$. If the value of the counter $Q_{cnt}$ is more than or equal to the threshold $Th_Q$, the process moves to step S230. On the other hand, if the value of the counter $Q_{cnt}$ is not more than or equal to the threshold $Th_Q$, a series of procedures illustrated in FIGS. 12 to 14 ends.

(Step S230) The angle estimating unit 125 determines whether the value of the counter $R_{cnt}$ is more than or equal to the threshold $Th_R$. If the value of the counter $R_{cnt}$ is more than or equal to the threshold $Th_R$, the process moves to step S232 of FIG. 13. On the other hand, if the value of the counter $R_{cnt}$ is not more than or equal to the threshold $Th_R$, the process moves to step S231.

(Step S231) The angle estimating unit 125 initializes the counter $Q_{cnt}$ to 0. After completing step S231, the series of procedures of FIGS. 12 to 14 ends.

(Step S232) The angle estimating unit 125 registers, as a target section, a traveling section of the vehicle C, corresponding to the registered target frame. Then, the angle estimating unit 125 increases the value of the counter $T_{cnt}$ by 1. The counter $T_{cnt}$ is a counter indicating the number of registered target sections, and is sometimes referred to as the target section number counter. In addition, the angle estimating unit 125 initializes the counter $Q_{cnt}$ to 0.

(Step S233) The angle estimating unit 125 determines whether the counter $T_{cnt}$ indicates a value more than or equal to the threshold $Th_T$. If the value of the counter $T_{cnt}$ is more than or equal to the threshold $Th_T$, the process moves to step S234. On the other hand, if the value of the counter $T_{cnt}$ is not more than or equal to the threshold $Th_T$, the series of procedures of FIGS. 12 to 14 ends.

(Step S234) The angle estimating unit 125 calculates a statistical value of the mounting angles $\Theta_0$ of all the registered target frames, and obtains the calculated statistical value as an estimated mounting angle $\Theta_0$. The mounting angle $\Theta_0$ obtained as the estimation result is stored (saved) in the memory unit 121.

(Step S235) The angle estimating unit 125 initializes each of the counters $P_{cnt}$, $Q_{cnt}$, and $T_{cnt}$ to 0. After completing step S235, the series of procedures of FIGS. 12 to 14 ends.

(Step S236) The angle estimating unit 125 determines that the captured image is an inadequate frame (an image captured during non-parallel traveling). In addition, the angle estimating unit 125 increases the value of the counter $S_{cnt}$ by 1. Note that the counter $S_{cnt}$ is a counter indicating the number of inadequate images, and is sometimes referred to as the inadequate frame counter.

(Step S237) The angle estimating unit 125 determines whether the counter $S_{cnt}$ indicates a value more than the threshold $Th_S$. If the value of the counter $S_{cnt}$ is more than the threshold $Th_S$, the process moves to step S238. On the other hand, if the value of the counter $S_{cnt}$ is not more than the threshold $Th_S$, the process moves to step S229 of FIG. 12.

(Step S238) The angle estimating unit 125 initializes the counter $Q_{cnt}$ to 0. After completing step S238, the process moves to step S229 of FIG. 12.

The processing flow of angle estimation based on lane markings in a plurality of short parallel sections has been described thus far.

[2.5. Example of Hardware]

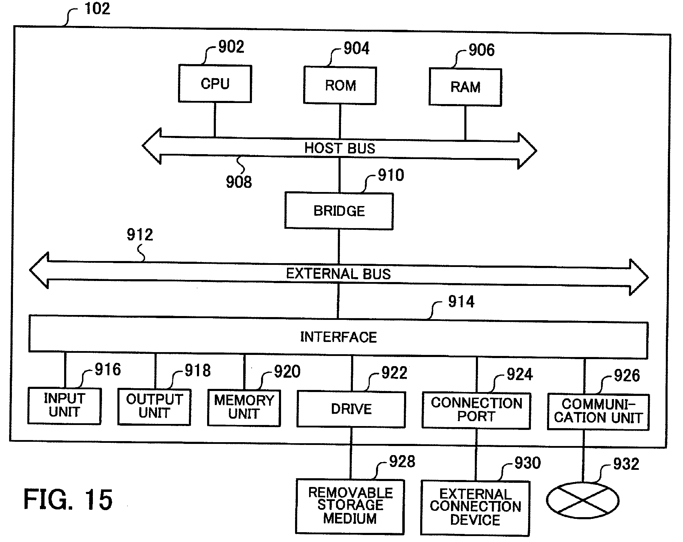

An example of hardware for implementing the functions of the control device 102 amongst the functions of the lane departure warning system 100 is described next with reference to FIG. 15. FIG. 15 illustrates an example of hardware for implementing functions of a control device according to the second embodiment. Note that a smartphone and a car navigation system are examples of an information processing apparatus having hardware illustrated in FIG. 15.

The functions of the control device 102 are able to be implemented by using, for example, hardware resources of the information processing apparatus of FIG. 15. That is, the functions of the control device 102 are implemented by controlling the hardware of FIG. 15 using a computer program.

As illustrated in FIG. 15, the hardware mainly includes a CPU 902, read only memory (ROM) 904, RAM 906, a host bus 908, and a bridge 910. The hardware also includes an external bus 912, an interface 914, an input unit 916, an output unit 918, a memory unit 920, a drive 922, a connection port 924, and a communication unit 926.

The CPU 902 functions, for example, as an arithmetic processing unit or a control device, and exercises control over all, or a part of, operations of the individual structural elements based on various programs recorded on the ROM 904, the RAM 906, the memory unit 920, or a removable storage medium 928. The ROM 904 is an example of storage devices for storing, for example, programs to be loaded into the CPU 902 and data or the like to be used for calculation.

The RAM 906 temporarily or permanently stores therein, for example, programs to be loaded into the CPU 902 as well as various parameters to change in the execution of the programs.

These structural elements are connected to each other, for example, via the host bus 908 capable of highspeed data transmission. On the other hand, the host bus 908 is connected, for example, through the bridge 910 to the external bus 912 with a relatively low data transmission speed. The input unit 916 is, for example, a mouse, a keyboard, a touch panel, a touch-pad, buttons, switches, levers or the like. Further, the input unit 916 may be a remote controller capable of transmitting a control signal using infrared or other radio waves.

The output unit 918 is, for example, a display device such as a cathode ray tube (CRT), a liquid crystal display (LCD), a plasma display panel (PDP), or an electro-luminescence display (ELD). Further, an audio output device, such as a speaker or headphones, or a printer may be employed as the output unit 918. That is, the output unit 918 is a device capable of outputting information visually or audibly.

The memory unit 920 is a device for storing therein various types of data. The memory unit 920 is, for example, a magnetic storage device such as a HDD, or alternatively may be a semiconductor storage device such as a solid state drive (SSD) and a RAM disk, an optical storage device, or a magneto-optical storage device.

The drive 922 is a device for reading information recorded on the removable storage medium 928 and writing information to the removable storage medium 928. The removable storage medium 928 is, for example, a magnetic disk, an optical disk, a magneto-optical disk, or a semiconductor memory.

The connection port 924 is a port for connecting an external connection device 930, and is, for example, a universal serial bus (USB) port, an Institute of Electrical and Electronics Engineers (IEEE)-1394 port, a small computer system interface (SCSI), an RS-232C port, or an optical audio terminal. The external connection device 930 is, for example, a printer.

The communication unit 926 is a communication device used to connect with a network 932. The communication unit 926 is, for example, a wired or wireless local area network (LAN) communication circuit, a wireless USB (WUSB) communication circuit, an optical communication circuit or router, an Asymmetric Digital Subscriber Line (ADSL) communication circuit or router, or a mobile network communication circuit. The network 932 connected to the communication unit 926 is a network connected with a wire or wirelessly, and is, for example, the Internet, a LAN, a broadcasting network, or a satellite communication link.

The example of hardware for implementing the functions of the control device 102 has been described thus far.

As has been described above, the second embodiment is directed to a method of detecting a lane from images captured by a camera to estimate the positional relationship between the detected lane and the camera, and measuring changes in the position of the vehicle in the lane width direction to thereby detect a parallel section in which the changes in the position are stable over a period of time. In addition, a method is presented to estimate the mounting angle of the camera based on an angle made by the camera and the lane using images captured in the parallel section. These methods allow images captured when the vehicle is traveling in a straight line but diagonally with respect to the lane to be excluded from the process of estimating the mounting angle of the camera, thus enabling highly accurate estimation of the mounting angle of the camera.

In addition, a method is also presented to estimate the mounting angle of the camera by using images captured in a plurality of short parallel sections, which enables highly accurate estimation of the mounting angle of the camera even when a long continuous and stable parallel section is not acquired. Further, since each parallel section is detected with reference to changes in the displacement of the vehicle with respect to the lane center, the method is robust to variation in the width of the lane. Furthermore, the method produces an estimation result in a robust way, independent of the traveling speed of the vehicle. The second embodiment has been described thus far.

According to one aspect, the orientation of an in-vehicle camera is estimated with a high degree of accuracy.

**Claims**

1. An information processing apparatus (10) comprising
memory means (11) for storing images captured in road sections by a camera (20) installed in a vehicle (C) **characterized by** further comprising
calculating means (12) for detecting, from each of the images, lane markings (L2, L3) delimiting lanes (LL, LR), determining the images captured in the road section (R1) where the vehicle (C) is traveling parallel to the lane markings (L2, L3), and estimating a direction of an optical axis of the camera (20) with reference to the lane marking (L2) included in each of the determined images.

2. The information processing apparatus (10) according to claim 1, wherein:

    the calculating means (12)

calculates, based on each of the captured images, a distance (E) from a center of a lane in which the vehicle (C) is traveling to the vehicle (C), and
determines that the vehicle (C) is traveling parallel to the lane marking (L2) when a change in the distance (E) is less than a predetermined threshold.

3. The information processing apparatus (10) according to one of claims 1 and 2, wherein:

the calculating means (12)
calculates a parameter determining the direction of the optical axis of the camera (20) with reference to the lane marking (L2) included in each image captured in each of road sections where the vehicle (C) is travelling parallel to the lane markings, and
estimates the direction of the optical axis of the camera (20) based on a statistical value of the parameters each calculated for each of the road sections.

4. The information processing apparatus (10) according to one of claims 1 to 3, wherein:

the calculating means (12) discards a result from detecting the lane markings from each of the captured images when at least one of a type, a number, and curvature of the lane markings and parallelism of the two lane markings on both sides of the vehicle (C) fails to fulfill a predetermined condition.

5. The information processing apparatus (10) according to one of claims 1 to 4, wherein:

the calculating means (12) determines, based on the lane markings included in each of the captured images, whether the vehicle (C) begins to cross out of the lane in which the vehicle (C) is traveling.

6. A camera mounting angle estimation method executed by a computer capable of acquiring images captured in road sections by a camera (20) installed in a vehicle (C), the camera mounting angle estimation method being **characterized by** comprising:

detecting, from each of the images, lane markings (L2, L3) delimiting lanes (LL, LR), determining the images captured in the road section (R1) where the vehicle (C) is traveling parallel to the lane markings (L2, L3), and estimating a direction of an optical axis of the camera with reference to the lane marking (L2) included in each of the determined images.

7. A computer program which causes a computer capable of acquiring images captured in road sections by a camera (20) installed in a vehicle (C) to perform a procedure **characterized by** comprising:

detecting, from each of the images, lane markings (L2, L3) delimiting lanes (LL, LR), determining the images captured in the road section (R1) where the vehicle (C) is traveling parallel to the lane markings (L2, L3), and estimating a direction of an optical axis of the camera with reference to the lane marking (L2) included in each of the determined images.

**Patentansprüche**

1. Informationsverarbeitungsvorrichtung (10) umfassend ein Speichermittel (11) zum Speichern von Bildern, die in Straßenabschnitten von einer Kamera (20), die in einem Fahrzeug (C) installiert ist, aufgenommen werden, **dadurch gekennzeichnet, dass** es ferner ein Berechnungsmittel (12) zum Detektieren anhand von jedem der Bilder von Fahrbahnmarkierungen (L2, L3), die Fahrbahnen (LL, LR) begrenzen, Bestimmen der Bilder, die in dem Straßenabschnitt (R1) aufgenommen werden, wo das Fahrzeug (C) parallel zu den Fahrbahnmarkierungen (L2, L3) fährt, und Schätzen einer Richtung einer optischen Achse der Kamera (20) bezüglich der Fahrbahnmarkierung (L2), die in jedem der bestimmten Bilder enthalten ist, umfasst.

2. Informationsverarbeitungsvorrichtung (10) nach Anspruch 1, wobei:

das Berechnungsmittel (12) auf Grundlage von jedem der aufgenommenen Bilder einen Abstand (E) von einer Mitte einer Fahrbahn, in welcher das Fahrzeug (C) fährt, zu dem Fahrzeug (C) berechnet, und bestimmt, dass das Fahrzeug (C) parallel zu der Fahrbahnmarkierung (L2) fährt, wenn eine Veränderung des Abstands (E) geringer als ein vorbestimmter Schwellenwert ist.

3. Informationsverarbeitungsvorrichtung (10) nach einem der Ansprüche 1 und 2, wobei:

das Berechnungsmittel (12)
einen Parameter berechnet, wobei die Richtung der optischen Achse der Kamera (20) bezüglich der Fahrbahnmarkierung (L2) bestimmt wird, die in jedem Bild enthalten ist, das in jedem der Straßenabschnitte aufgenommen wird, wo das Fahrzeug (C) parallel zu den Fahrbahnmarkierungen fährt, und
die Richtung der optischen Achse der Kamera (20) auf Grundlage eines statistischen Werts der Parameter schätzt, von denen jeder für jeden der Straßenabschnitte berechnet wird.

4. Informationsverarbeitungsvorrichtung (10) nach einem der Ansprüche 1 bis 3, wobei:

das Berechnungsmittel (12) ein Ergebnis von dem Detektieren der Fahrbahnmarkierungen von jedem der aufgenommenen Bilder verwirft, wenn mindestens eine einer Art, einer Anzahl und Krümmung der Fahrbahnmarkierungen und einer Parallelität der beiden Fahrbahnmarkierungen auf beiden Seiten des Fahrzeugs (C) eine vorbestimmte Bedingung nicht erfüllt.

5. Informationsverarbeitungsvorrichtung (10) nach einem der Ansprüche 1 bis 4, wobei:

das Berechnungsmittel (12) auf Grundlage der Fahrbahnmarkierungen, die in jedem der aufgenommenen Bilder enthalten sind, bestimmt, ob das Fahrzeug (C) beginnt, die Fahrbahn, in welcher das Fahrzeug (C) fährt, zu überqueren.

6. Kameramontagewinkel-Schätzverfahren, das von einem Computer ausgeführt wird, der in der Lage ist, Bilder zu erfassen, die in Straßenabschnitten von einer Kamera (20), die in einem Fahrzeug (C) installiert ist, aufgenommen werden, wobei das Kameramontagewinkel-Schätzverfahren **dadurch gekennzeichnet ist, dass** es
das Detektieren anhand von jedem der Bilder von Fahrbahnmarkierungen (L2, L3), die Fahrbahnen (LL, LR) begrenzen, das Bestimmen der Bilder, die in dem Straßenabschnitt (R1) aufgenommen werden, wo das Fahrzeug (C) parallel zu den Fahrbahnmarkierungen (L2, L3) fährt, und das Schätzen einer Richtung einer optischen Achse der Kamera bezüglich der Fahrbahnmarkierung (L2), die in jedem der bestimmten Bilder enthalten ist, umfasst.

7. Computerprogramm, welches einen Computer, der in der Lage ist, Bilder zu erfassen, die in Straßenabschnitten von einer Kamera (20), die in einem Fahrzeug (C) installiert ist, aufgenommen werden, dazu bringt, ein Verfahren durchzuführen, das **dadurch gekennzeichnet ist, dass** es
das Detektieren anhand von einem der Bilder von Fahrbahnmarkierungen (L2, L3), die Fahrbahnen (LL, LR) begrenzen, das Bestimmen der Bilder, die in dem Straßenabschnitt (R1) aufgenommen werden, wo das Fahrzeug (C) parallel zu den Fahrbahnmarkierungen (L2, L3) fährt, und das Schätzen einer Richtung einer optischen Achse der Kamera bezüglich der Fahrbahnmarkierung (L2), die in jedem der bestimmten Bilder enthalten ist, umfasst.

## Revendications

1. Appareil de traitement d'information (10) comportant
un moyen de mémoire (11) pour stocker des images capturées dans des sections de route par une caméra (20) installée dans un véhicule (C), **caractérisé en ce qu'**il comporte en outre
un moyen de calcul (12) pour détecter, à partir de chacune des images, les marquages au sol (L2, L3) délimitant les voies (LL, LR), déterminer les images capturées dans la section de route (R1) où le véhicule (C) en se déplace parallèlement aux marquages au sol (L2, L3), et estimer une direction d'un axe optique de la caméra (20) en référence au marquage au sol (L2) compris dans chacune des images déterminées.

2. Appareil de traitement d'information (10) selon la revendication 1, dans lequel :

le moyen de calcul (12)
calcule, en fonction de chacune des images capturées, une distance (E) depuis un centre d'une voie dans laquelle le véhicule (C) se déplace par rapport au véhicule (C), et
détermine que le véhicule (C) se déplace parallèlement au marquage au sol (L2) lorsqu'un changement dans la distance (E) est inférieur à un seuil prédéterminé.

**3.** Appareil de traitement d'information (10) selon l'une des revendications 1 et 2, dans lequel :

le moyen de calcul (12)
calcule un paramètre déterminant la direction de l'axe optique de la caméra (20) en référence au marquage au sol (L2) compris dans chaque image capturée dans chacune des sections de route lorsque le véhicule (C) se déplace parallèlement aux marquages au sol, et
estime la direction de l'axe optique de la caméra (20) en fonction d'une valeur statistique des paramètres calculés chacun pour chacune des sections de route.

**4.** Appareil de traitement d'information (10) selon l'une des revendications 1 à 3, dans lequel :

le moyen de calcul (12) rejette un résultat de la détection des marquages au sol de chacune des images capturées lorsqu'au moins l'un d'un type, d'un nombre, et d'une courbe des marquages au sol et du parallélisme de deux marquages au sol sur les deux côtés du véhicule (C) ne remplit pas une condition prédéterminée.

**5.** Appareil de traitement d'information (10) selon l'une des revendications 1 à 4, dans lequel :

le moyen de calcul (12) détermine, en fonction des marquages au sol compris dans chacune des images capturées, si le véhicule (C) commence à s'écarter de la voie dans laquelle le véhicule (C) se déplace.

**6.** Procédé d'estimation d'angle de montage de caméra exécuté par un ordinateur pouvant acquérir des images capturées dans des sections de route par une caméra (20) installée dans un véhicule (C), le procédé d'estimation d'angle de montage de caméra étant **caractérisé en ce qu'**il comporte :

la détection, à partir de chacune des images, des marquages au sol (L2, L3) délimitant les voies (LL, LR), la détermination des images capturées dans la section de route (R1) où le véhicule (C) se déplace parallèlement aux marquages au sol (L2, L3), et l'estimation d'une direction d'un axe optique de la caméra en référence au marquage au sol (L2) compris dans chacune des images déterminées.

**7.** Programme informatique qui amène un ordinateur pouvant acquérir des images capturées dans des sections de route par une caméra (20) installée dans un véhicule (C) pour effectuer une procédure **caractérisée en ce qu'**elle comporte :

la détection, à partir de chacune des images, des marquages au sol (L2, L3) délimitant les voies (LL, LR), la détermination des images capturées dans la section de route (R1) où le véhicule (C) se déplace parallèlement aux marquages au sol (L2, L3), et l'estimation d'une direction d'un axe optique de la caméra en référence au marquage au sol (L2) compris dans chacune des images déterminées.

FIG. 1

(B) LANE MARKING L2

DIRECTION OF OPTICAL AXIS

$\theta_0$

$\theta_1$

TRAVELING DIRECTION

VEHICLE C   CAMERA 20

10

INFORMATION PROCESSING APPARATUS

11

20

CAMERA

MEMORY UNIT

CALCULATING UNIT

12

(A)

LANE MARKING L1

LANE CENTER  VEHICLE C

LANE MARKING L2

LANE LL

DISTANCE E

LANE LR

SECTION R2  LANE MARKING L3

SECTION R1

17

LANE DEPARTURE
WARNING SYSTEM 100

CAMERA
101
CONTROL
DEVICE 102

VEHICLE C

PITCH ANGLE φ

DIRECTION OF
OPTICAL AXIS

FIELD OF
VIEW

HEIGHT H

ROAD
SURFACE

FIG. 2

(A)

(B)

M : DISTANCE FROM VEHICLE TO LANE MARKING
W : WIDTH OF LANE
E : DISTANCE FROM CAMERA TO LANE CENTER
$\Theta_0$ : TILT OF CAMERA WITH RESPECT TO VEHICLE (MOUNTING ANGLE)
$\Theta_d$ : TILT OF CAMERA WITH RESPECT TO LANE
D : DISTANCE FROM CENTER OF CAMERA TO FOREFRONT OF VEHICLE
d : DISTANCE FROM CENTER OF CAMERA TO CENTER OF VEHICLE
$W_v$ : WIDTH OF VEHICLE

# FIG. 3

100 : LANE DEPARTURE WARNING SYSTEM

102

CONTROL DEVICE 122

101

CAMERA

121
MEMORY UNIT

LANE DETECTING UNIT — 122

123
PARAMETER ESTIMATING UNIT

PARALLEL DETERMINING UNIT
124

ANGLE ESTIMATING UNIT
125

DEPARTURE DETERMINING UNIT — 126

WARNING OUTPUT UNIT — 127

FIG. 4

ANGLE ESTIMATION BASED ON LANE MARKINGS IN PARALLEL SECTION

FIG. 5

ANGLE ESTIMATION BASED ON LANE MARKINGS IN
PLURALITY OF SHORT PARALLEL SECTIONS

LANE MARKING

$E_1$

VEHICLE C

$E_7$

LANE
CENTER

$E_2$

$E_3$

$E_4$

$E_6$

LANE
MARKING

CHANGE
$\Delta E$

$Th_E$

$t_1$    $t_2$    $t_3$    $t_4$    $t_5$    $t_6$    $t_7$    TIME t

$\Delta t_1$
(NON-
PARALLEL)

$\Delta t_2$
(PARALLEL)

$\Delta t_3$
(NON-
PARALLEL)

$\Delta t_4$
(PARALLEL)

$\Delta t_5$
(NON-PARALLEL)

$\Delta t_6$
(PARALLEL)

$(\Delta t_2 < T_0)$

$(\Delta t_4 < T_0)$

FIG. 6

RESPONSES TO DEGRADATION AND OTHER ASPECTS OF LANE MARKINGS

| | CRITERIA | | EXAMPLE |
|---|---|---|---|
| #1 | DETERMINATION OF CHANGE IN DISTANCE IN LANE WIDTH DIRECTION | | CHANGE IN DISTANCE IN LANE WIDTH DIRECTION ≥ THRESHOLD → INADEQUATE |
| #2 | NORMALITY EVALUATION OF DETECTED LANE MARKINGS | LANE MARKING TYPE | AUXILIARY LINE IS INSTALLED → INADEQUATE |
| #3 | | RESULT OF DETECTION | ONE OF LANE MARKINGS IS NOT DETECTED → INADEQUATE |
| #4 | | CURVATURE OF LANE MARKINGS | CURVATURE OF LANE MARKINGS ≥ THRESHOLD → INADEQUATE |
| #5 | | PARALLELISM OF LANE MARKINGS | LANE MARKINGS ON BOTH SIDES ARE NOT PARALLEL TO EACH OTHER → INADEQUATE |

FIG. 7

## ANGLE ESTIMATION BASED ON LANE MARKINGS IN PARALLEL SECTION

START

READ CAPTURED IMAGE — S101

DETECT LANE MARKINGS — S102

ESTIMATE PARAMETERS — S103

NO ← ESTIMATE MOUNTING ANGLE? — S104

YES

ESTIMATION OF MOUNTING ANGLE — S105

DETERMINE IF LANE DEPARTURE OCCURS AND ISSUE WARNING — S106

END PROCEDURES? — S107

YES → END

NO

FIG. 8

ANGLE ESTIMATION BASED ON
LANE MARKINGS IN PARALLEL SECTION

$$\left(\begin{array}{c} \text{ESTIMATION OF} \\ \text{MOUNTING ANGLE} \end{array}\right)$$

|| DETECTION OF TRAVELING DIRECTION || ~S111

NO

TRAVELING DIRECTION // LANE MARKINGS? ~S112

YES

NO

NUMBER OF IMAGES CONTINUOUSLY CAPTURED DURING PARALLEL TRAVELING $\geqq T_0$'? ~S113

YES

CALCULATE AND STORE MOUNTING ANGLE ~S114

END

# FIG. 9

ANGLE ESTIMATION BASED ON LANE
MARKINGS IN PARALLEL SECTION

```
        ┌─────────────────────────┐
        │      DETECTION OF        │
        │   TRAVELING DIRECTION    │
        └─────────────────────────┘
                    │
                    ▼
    ┌──────────────────────────────┐
    │ CALCULATE CHANGE |ΔE| IN LANE │───── S121
    │        WIDTH DIRECTION        │
    └──────────────────────────────┘
                    │
        NO          ▼
    ┌───────────────────────────────┐
    │       ΔE > THRESHOLD ThE?      │───── S122
    └───────────────────────────────┘
                    │
                   YES
                    ▼
    ┌──────────────────────────────┐
    │    DISTANCE E → REFERENCE     │───── S123
    │           VALUE EP           │
    └──────────────────────────────┘
                    │
                    ▼
    ┌──────────────────────────────┐
    │  TRAVELING DIRECTION ∦ LANE   │───── S124
    │          MARKINGS             │
    └──────────────────────────────┘
                    │
                    ▼
    ┌──────────────────────────────┐
    │  TRAVELING DIRECTION // LANE  │───── S125
    │          MARKINGS             │
    └──────────────────────────────┘
                    │
                    ▼
    ┌──────────────────────────────┐
    │       STORE PARAMETERS        │───── S126
    └──────────────────────────────┘
                    │
                    ▼
        ┌─────────────────────────┐
        │           END           │
        └─────────────────────────┘
```

# FIG. 10

ANGLE ESTIMATION BASED ON LANE MARKINGS IN
PLURALITY OF SHORT PARALLEL SECTIONS

```
        ┌──────────────────────┐
        │    ESTIMATION OF      │
        │   MOUNTING ANGLE      │
        └──────────────────────┘
                   │
                   ▼
        ┌──────────────────────┐
        │ DETECTION OF TRAVELING│  ── S211
        │     DIRECTION         │
        └──────────────────────┘
                   │
                   ▼
   NO   ╱─────────────────────╲
◄───────  TRAVELING DIRECTION ∥ LANE   ── S212
        ╲    MARKINGS?         ╱
                   │ YES
                   ▼
   NO   ╱─────────────────────╲
◄───────  NUMBER OF IMAGES CON-        ── S213
        ╲ TINUOUSLY CAPTURED DURING
          PARALLEL TRAVELING ≧ T₁'?  ╱
                   │ YES
                   ▼
        ┌──────────────────────┐
        │  CALCULATE AND STORE  │  ── S214
        │ MOUNTING ANGLE FOR SECTION
        └──────────────────────┘
                   │
                   ▼
   NO   ╱─────────────────────╲
◄───────   S ≧ THRESHOLD Ths?         ── S215
        ╲─────────────────────╱
                   │ YES
                   ▼
        ┌──────────────────────┐
        │  CALCULATE AND STORE  │  ── S216
        │   MOUNTING ANGLE      │
        └──────────────────────┘
                   │
                   ▼
        ┌──────────────────────┐
        │         END          │
        └──────────────────────┘
```

FIG. 11

## ANGLE ESTIMATION BASED ON LANE MARKINGS IN PLURALITY OF SHORT PARALLEL SECTIONS (SPECIFIC EXAMPLE)

ESTIMATION OF
MOUNTING ANGLE

$P_{cnt} < Th_P$ — S221

NO

YES

$P_{cnt} = 0, Q_{cnt} = 0, T_{cnt} = 0$ — S223

$P_{cnt} = P_{cnt} + 1$ — S222

$Q_{cnt} = 0$ ? — S224

NO

YES

$R_{cnt} = 0, S_{cnt} = 0$ — S225

$Q_{cnt} = Q_{cnt} + 1$ — S226

TRAVELING DIRECTION // LANE MARKINGS? — S227

NO — C

YES

REGISTER AS TARGET FRAME
$R_{cnt} = R_{cnt} + 1$ — S228

D

NO

$Q_{cnt} \geqq Th_Q$ ? — S229

YES

$R_{cnt} \geqq Th_R$ ? — S230

YES — A

NO

$Q_{cnt} = 0$ — S231

B

FIG. 12

$P_{cnt}$ : FRAME COUNTER
$Q_{cnt}$ : FRAME COUNTER (WITHIN SECTION)
$R_{cnt}$ : TARGET FRAME COUNTER (WITHIN SECTION)
$S_{cnt}$ : INADEQUATE FRAME COUNTER (WITHIN SECTION)
$T_{cnt}$ : TARGET SECTION NUMBER COUNTER

A

REGISTER AS TARGET SECTION
AND INITIALIZE
$T_{cnt} = T_{cnt} + 1$, $Q_{cnt} = 0$ — S232

NO

$T_{cnt} \geqq Th_T$ ? — S233

YES

CALCULATE STATISTICAL VALUE
OF MOUNTING ANGLES OF ALL
TARGET FRAMES, AND SET AND
STORE STATISTICAL VALUE AS
MOUNTING ANGLE — S234

$P_{cnt} = 0$, $Q_{cnt} = 0$, $T_{cnt} = 0$ — S235

B

END

FIG. 13

C

DETERMINE AS INADEQUATE
FRAME
$S_{cnt} = S_{cnt} + 1$

S236

NO $\longleftarrow$ $S_{cnt} > Th_S$ ? $\longrightarrow$ S237

YES

$Q_{cnt} = 0$ $\longrightarrow$ S238

D

# FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4045862 B
- JP 2001171544 A

- DE 1020110011903 A1